Europäisches Patentamt

European Patent Office

Office européen des brevets

(11) Veröffentlichungsnummer: **0 688 840 A2**

(12) **EUROPÄISCHE PATENTANMELDUNG**

(21) Anmeldenummer: **95109313.7**

(22) Anmeldetag: **16.06.95**

(30) Priorität: **20.06.94 DE 4421525**

(43) Veröffentlichungstag der Anmeldung:
**27.12.95 Patentblatt 95/52**

(84) Benannte Vertragsstaaten:
**AT BE DE ES FR GB IT NL PT SE**

(51) Int. Cl.6: **C09D 167/00, C09D 133/06**

(71) Anmelder: **Herberts Gesellschaft mit
beschränkter Haftung
Christbusch 25
D-42285 Wuppertal (DE)**

(72) Erfinder: **Bederke, Klaus, Dr.
Oststr. 36
D-45549 Sprockhövel (DE)**
Erfinder: **Herrmann, Friedrich**

**Friedrichsallee 27
D-42117 Wuppertal (DE)**
Erfinder: **Kerber, Hermann
Daniel-Schürmann-Weg 37
D-42369 Wuppertal (DE)**
Erfinder: **Kutzner, Thomas
In Lübbering 2
D-45549 Sprockhövel (DE)**
Erfinder: **Schönrock, Hans Martin
Konradshöhe 1
D-42289 Wuppertal (DE)**

(74) Vertreter: **Türk, Gille, Hrabal, Leifert
Brucknerstrasse 20
D-40593 Düsseldorf (DE)**

(54) **Überzugsmittel und deren Verwendung bei Verfahren zur Herstellung von Mehrschichtüberzügen**

㊼ Beschrieben werden Überzugsmittel auf der Basis hydroxyfunktioneller Polyesterharze, hydroxylfunktioneller (Meth)acryl-Copolymerisate, Vernetzungsmittel, lacküblicher Additive und Lösemittel, die besonders zur Herstellung transparenter Deckschichten von Mehrschichtüberzügen geeignet sind. Sie enthalten Bindemittel auf der Basis von

  A) 10 bis 80 Gew.-% eines oder mehrerer hydroxyfunktioneller Polyester, die erhältlich sind durch Reaktion von:

    a1) 0 bis 30 Mol-% eines oder mehrerer Glycidylester von alpha, alpha-dialkylsubstituierten aliphatischen Monocarbonsäuren,

    a2) 10 bis 40 Mol-% eines oder mehrerer 2,2-Dialkylalkandiole,

    a3) 10 bis 30 Mol-% eines oder mehrerer Polyole mit mindestens einer sekundären OH-Gruppe im Molekül,

    a4) 20 bis 50 Mol-% einer oder mehrerer aliphatischer und/oder cycloaliphatischer Dicarbonsäuren mit weniger als 16 C-Atomen oder deren Anhydride,

    a5) 5 bis 30 Mol-% einer oder mehrerer Dimer-Fettsäuren und/oder Dimer-Diole und/oder epsilon-Caprolacton,

    a6) 1 bis 15 Mol-% einer oder mehrerer Hydroxycarbonsäuren mit mindestens einer Hydroxylgruppe und mindestens einer Carboxylgruppe im Molekül,

    a7) 0 bis 3 Mol-% einer oder mehrerer alpha,beta-ungesättigter Dicarbonsäuren oder deren Anhydriden, wobei die Summe der Mol-% a1) bis a7) sich jeweils zu 100 Mol-% ergänzt,

  B) 10 bis 80 Gew.-% eines oder mehrerer hydroxylgruppenhaltiger (Meth)acryl-Copolymerisate,

  C) 10 bis 60 Gew.-% eines oder mehrerer Vernetzungsmittel,

  wobei die Summe der Gew.-% der Komponenten A) bis C) sich jeweils zu 100 Gew.-% ergänzt.

EP 0 688 840 A2

Die Erfindung betrifft Überzugsmittel, die insbesondere für transparente aber auch pigmentierte Einbrenn-Mehrschichtübzüge, beispielsweise bei der Autoserienlackierung geeignet sind, die sich durch eine hohe Beständigkeit gegen den "sauren Regen" (Acid-Rain-Resistance) und eine hohe Kratzfestigkeit auszeichnen.

Die DE-A-39 18 968 beschreibt als kratzfeste Klarlacke unter anderen mit freien oder blockierten Polyisocyanaten härtende Überzugsmittel auf Basis einer Kombination aus niedermolekularem Polyol mit einem Gewichtsmittel des Molekulargewichts von 2000 und einer Hydroxylzahl von 150 bis 400 mg KOH/g und hydroxylgruppenhaltigem Acrylharz mit einem Gewichtsmittel des Molekulargewichts von 5000 bis 50000 und einer Hydroxylzahl von 50 bis 180 mg KOH/g. Bei dem niedermolekularen Polyol kann es sich um ein verzweigtkettiges Polyesterpolyol handeln. Als bevorzugte Aufbaukomponenten des verzweigtkettigen Polyesterpolyols werden beispielsweise Cyclohexandimethanol, Trimethylolpropan und Bernsteinsäureanhydrid oder Adipinsäure genannt. Dimersäure soll möglichst in nur kleiner Menge eingesetzt werden. Die Säurebeständigkeit der erhaltenen Lackierungen und die Kratzfestigkeit sind verbesserungsbedürftig.

Es ist bekannt, daß bisher keine insbesondere für die Autolackierung geeigneten Systeme existieren, die sowohl eine extreme Säurefestigkeit als auch eine extreme Kratzfestigkeit aufweisen (I-Lack, 1/93, 61. Jahrgang, Seiten 30 bis 34, insbesondere Seite 34).

Aufgabe der Erfindung ist die Bereitstellung von Überzugsmitteln für Einbrenn-Mehrschichtüberzüge insbesondere für die Automobilserienlakkierung, die sowohl zu Überzügen mit einer hohen Säurebeständigkeit, insbesondere einer verbesserten Beständigkeit gegen Schwefelsäure, als auch mit hoher Kratzfestigkeit führen.

Es hat sich gezeigt, daß die Forderung nach schwefelsäurebeständigen und gleichzeitig kratzfesten Überzügen durch Überzugsmittel erfüllt werden kann, welche eines oder mehrere hydroxylfunktionelle Polyesterharze, eines oder mehrere hydroxylfunktionelle (Meth)acryl-Copolymerisate, Vernetzungsmittel, lackübliche Additive und Lösemittel enthalten. Die Überzugsmittel sind dadurch gekennzeichnet, daß sie Bindemittel enthalten auf der Basis von

A) 10 bis 80 Gew.-% eines oder mehrerer hydroxyfunktioneller Polyester, die erhältlich sind durch Reaktion von:

a1) 0 bis 30 Mol-% eines oder mehrerer Glycidylester von alpha,alphadialkylsubstituierten aliphatischen Monocarbonsäuren,

a2) 10 bis 40 Mol-%, bevorzugt 20 bis 40 Mol-% eines oder mehrerer 2,2-Dialkylalkandiole,

a3) 10 bis 30 Mol-%, bevorzugt 10 bis 20 Mol-% eines oder mehrerer Polyole mit mindestens einer sekundären OH-Gruppe im Molekül,

a4) 20 bis 50 Mol-%, bevorzugt 25 bis 45 Mol-% einer oder mehrerer aliphatischer und/oder cycloaliphatischer Dicarbonsäuren mit weniger als 16 C-Atomen oder deren Anhydride,

a5) 5 bis 30 Mol-% einer oder mehrerer Dimer-Fettsäuren und/oder Dimer-Diole und/oder epsilon-Caprolacton,

a6) 1 bis 15 Mol-%, bevorzugt 3 bis 12 Mol-% einer oder mehrerer Hydroxycarbonsäuren mit mindestens einer Hydroxylgruppe und mindestens einer Carboxylgruppe im Molekül,

a7) 0 bis 3 Mol-% einer oder mehrerer alpha,beta-ungesättigter Dicarbonsäuren oder deren Anhydriden,

wobei die Summe der Mol-% a1) bis a7) sich jeweils zu 100 Mol-% ergänzt,

B) 10 bis 80 Gew.-% eines oder mehrerer hydroxylgruppenhaltiger (Meth)acryl-Copolymerisate,

C) 10 bis 60 Gew.-% eines oder mehrerer Vernetzungsmittel,

wobei die Summe der Gew.-% der Komponenten A) bis C) sich jeweils zu 100 Gew.-% ergänzt.

Die als Komponente A) eingesetzten hydroxyfunktionellen Polyester stellen Polykondensationsprodukte dar aus den Komponenten a1) bis a7). Derartige Polyester werden in der Regel mit einem Alkohol-Überschuß hergestellt. Die OH-Zahlen liegen bevorzugt bei 40 bis 200, besonders bevorzugt bei 80 bis 180 mg KOH/g, die Säurezahlen beispielsweise bei 5 bis 100, vorzugsweise bei 10 bis 40. Die gewichtsmittleren Molekulargewichte betragen beispielsweise 500 bis 6000, vorzugsweise 1000 bis 4000 g/Mol.

Die Komponente A) kann auf verschiedene Weise aus den Komponenten a1) bis a7) hergestellt werden. Die Herstellung kann stufenweise oder bevorzugt im Eintopfverfahren erfolgen. Die Umsetzung der Reaktanten kann bei erhöhter Temperatur vorgenommen werden, z.B. bei Temperaturen von 120 bis 240 °C, bis der gewünschte Polykondensationsgrad erreicht ist.

Als Komponente a1) können Glycidylester von alpha,alpha-dialkylsubstituierten aliphatischen Monocarbonsäuren eingesetzt werden. Derartige Verbindungen sind im Handel erhältlich, z.B. Glycidylester von alpha,alpha-dialkylsubstituierten aliphatischen Monocarbonsäuren mit 9 bis 11 Kohlenstoffatomen, beispielsweise von Neodekansäuren, Handelsprodukte Cardura R, wie Cardura-E10, der Firma Shell.

Als Komponente a2) dienen 2,2-Dialkyl-alkandiole, insbesondere solche mit mehr als 5 C-Atomen im Molekül. Besonders bevorzugt sind 2,2-Dialkyl-alkandiole-1,3, insbesondere mit mehr als 5 C-Atomen im Molekül; Beispiele hierfür sind 2-Ethyl-2-butylpropandiol-1,3, 2-Ethyl-2-hexylpropandiol-1,3, 2-Ethyl-2-ethylhexylpropandiol-1,3, 2,2-Di-tert.-Butylpropandiol-1,3,2,2-Diethylpropandiol-1,3. Bevorzugt werden 2-Ethyl-2-hexylpropandiol-1,3und 2,2-Di-Ethylpropandiol-1,3 eingesetzt.

Als Komponente a3) können Polyole mit mindestens einer sekundären OH-Gruppe im Molekül eingesetzt werden. Diese enthalten bevorzugt mindestens zwei primäre OH-Gruppen. Beispiele hierfür sind Glycerin und Hexantriol-1,2,6.

Als Komponente a4) werden (cyclo)aliphatische Polycarbonsäuren oder deren Anhydride, insbesondere Dicarbonsäuren eingesetzt. Beispiele für aliphatische Dicarbonsäuren sind Bernsteinsäure, Adipinsäure, Sebacinsäure, Dodecandicarbonsäure. Besonders bevorzugt werden cycloaliphatische Dicarbonsäuren, beispielsweise 1,2-, 1,3- und 1,4-Cyclohexandicarbonsäure und 1,2-Cyclohexandicarbonsäureanhydrid.

Als Komponente a5) werden eine oder mehrere Dimer-Fettsäuren und/oder Dimer-Diole und/oder epsilon-Caprolacton eingesetzt. Bevorzugt handelt es sich bei den Dimer-Fettsäuren und Dimer-Diolen um hydrierte, d.h. von olefinischen Doppelbindungen freie Produkte. Die Dimer-Fettsäuren und/oder Dimer-Diole werden bevorzugt in Mengen von 5 bis 15 Mol-% eingesetzt. Epsilon-Caprolacton wird bevorzugt in Mengen von 15 bis 30 Mol-% eingesetzt.

Als Komponente a6) werden Hydroxycarbonsäuren eingesetzt. Besonders bevorzugt werden Hydroxycarbonsäuren mit tertiär gebundener Carboxylgruppe verwendet. Bevorzugte Beispiele hierfür sind 2,2-Dialkyl-omega-hydroxyalkyl-carbonsäuren-1, wobei die Alkylreste beispielsweise 1 bis 6 Kohlenstoffatome aufweisen. Spezielle Beispiele sind 2,2-Dimethylolpropionsäure und 3-Hydroxypivalinsäure.

Als Komponente a7) können alpha,beta-ungesättigte Dicarbonsäuren oder deren Anhydride eingesetzt werden. Beispiele sind Maleinsäure, Fumarsäure, Itaconsäure. Besonders bevorzugt wird Maleinsäureanhydrid.

Bevorzugte Beispiele für hydroxyfunktionelle Polyester der Komponente A) können hergestellt werden aus 2-Ethyl-2-butylpropandiol-1,3 als Komponente a2), Glycerin und/oder Hexantriol-1,2,6 als Komponente a3), 1,2-Cyclohexandicarbonsäureanhydrid und/oder 1,4-Cyclohexandicarbonsäure als Komponente a4), Dimerfettsäure, Dimerdiol und/oder epsilon-Caprolacton als Komponente a5), Dimethylolpropionsäure als Komponente a6) und Maleinsäureanhydrid als Komponente a7). Eine besonders bevorzugte Polyesterkomponente A) wird hergestellt aus 2-Ethyl-2-butylpropandiol-1,3 als Komponente a2), Glycerin als Komponente a3), 1,2-Cyclohexandicarbonsäureanhydrid als Komponente a4), Dimerfettsäure als Komponente a5) und Dimethylolpropionsäure als Komponente a6).

Die Herstellung der in dem erfindungsgemäßen Überzugsmittel enthaltenen (Meth)acryl-Copolymerisate (Komponente B) kann beispielsweise durch Polymerisation nach üblichen Verfahren, z.B. der Substanz-, Lösungs- oder Perlpolymerisation durchgeführt werden. Die verschiedenen Polymerisationsverfahren sind gut bekannt und werden beispielsweise beschrieben in Houben-Weyl, Methoden der Organischen Chemie, 4. Aufl., Band 14/1, S. 24 - 255 (1961).

Das Lösungspolymerisationsverfahren wird für die Herstellung der im erfindungsgemäßen Überzugsmittel eingesetzten (Meth)acryl-Copolymerisate bevorzugt. Bei diesem Verfahren wird das Lösemittel in das Reaktionsgefäß vorgelegt, auf Siedetemperatur geheizt und das Monomeren/Initiatorgemisch kontinuierlich in einer bestimmten Zeit zudosiert. Die Lösungspolymerisation kann aber auch so durchgeführt werden, daß die Zugabe der Monomeren zeitlich versetzt, d.h. alternierend oder nacheinander erfolgt.

Die Polymerisation wird beispielsweise bei Temperaturen zwischen 60°C und 160°C, vorzugsweise bei 80°C bis 140°C durchgeführt.

Die Polymerisationsreaktion kann mit bekannten Polymerisationsinitiatoren gestartet werden. Geeignete Initiatoren sind übliche Per- und Azo-Verbindungen, die in einer Reaktion erster Ordnung thermisch in Radikale zerfallen. Initiatorart und -menge werden so gewählt, daß bei der Polymerisationstemperatur während der Zulaufphase ein möglichst konstantes Radikalangebot vorliegt.

Beispiele für bevorzugt eingesetzte Initiatoren für die Polymerisation sind: Dialkylperoxide, wie Di-tert.-Butylperoxid, Di-cumylperoxid; Diacylperoxide, wie Di-benzoylperoxid, Di-lauroylperoxid; Hydroperoxide, wie Cumolhydroperoxid, tert.-Butylhydroperoxid; Perester, wie tert.-Butyl-perbenzoat, tert.-Butyl-perpivalat, tert.-Butyl-per-3,5,5-trimethylhexanoat, tert.-Butyl-per-2-ethylhexanoat; Peroxydicarbonate, wie Di-2-ethylhexyl-peroxydicarbonat, Dicyclo-hexyl-peroxydicarbonat; Perketale, wie 1,1-Bis-(tert.-Butylperoxy)-3,5,5-trimethylcyclohexan, 1,1-Bis-(tert.-Butylperoxy)cyclohexan; Ketonperoxide, wie Cyclohexanonperoxid, Methylisobutylketonperoxid; Azo-Verbindungen, wie 2,2'-Azo-bis(2,4-dimethylvaleronitril), 2,2'-Azo-bis(2-methylbutyronitril), 1,1'-Azo-bis-cyclohexancarbonitril, Azo-bis-isobutyronitril.

Die Polymerisationsinitiatoren, insbesondere die Perester, werden bevorzugt in einer Menge von 0,2 bis 5 Gew.-% auf die Monomeren-Einwaage, eingesetzt.

Als organische Lösemittel, die zweckmäßigerweise bei der Lösungspolymerisation sowie später auch in dem erfindungsgemäßen Überzugsmittel eingesetzt werden, eignen sich beispielsweise Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol; aromatische Kohlenwasserstoffe, wie Xylol, Solvesso 100 (eingetragenes Warenzeichen) und aliphatische Kohlenwasserstoffe können ebenfalls insbesondere im Verschnitt mit den oben genannten Lösemitteln eingesetzt werden.

Zur Regelung des Molekulargewichts können insbesondere bei der bevorzugten Lösungspolymerisation übliche Kettenüberträger mitverwendet werden. Beispiele sind funktionalisierte oder nicht-funktionalisierte Mercaptane, wie Mercaptoethanol, n-Octylmercaptan, Thioglykolsäureester, Chlor-Kohlenwasserstoffe, Cumol, dimeres alpha-Methylstyrol.

Die Polymerisationsbedingungen (Reaktionstemperatur, Zulaufzeit der Monomerenmischung, Lösungskonzentration) werden so eingerichtet, daß die (Meth)acryl-Copolymerisate für das erfindungsgemäß hergestellte Überzugsmittel bevorzugt ein Gewichtsmittel der Molmasse (Mw) (bestimmt durch Gelpermeationschromatographie unter Verwendung von Polystyrol als Eichsubstanz) zwischen 2000 bis 20000 aufweisen.

Die hydroxylgruppenhaltigen (Meth)acryl-Copolymerisate des erfindungsgemäß hergestellten Überzugsmittels liegen bevorzugt in einem Glasübergangstemperatur-Bereich von -20°C bis +80°C, berechnet aus den in der Literatur angegebenen Glasübergangstemperaturen der Homopolymerisate der einzelnen Monomeren (FOX-Gleichung, siehe z.B. Polymere Werkstoffe, Batzer, 1985, Seite 307).

Als Monomerkomponente für die Herstellung der hydroxylgruppenhaltigen (Meth)acryl-Copolymerisate (Komponente B) werden bevorzugt Alkylester der Acrylsäure oder Methacrylsäure eingesetzt. Unter (meth)acryl wird hier acryl und/oder methacryl verstanden. Beispiele hierfür sind: Methylacrylat, Methylmethacrylat, Ethylacrylt, Ethylmethacrylat, Isopropylmethacrylat, tert.-Butylacrylat, n-Butylacrylat, n-Butylmethacrylat, Isobutylacrylat, Isobutylmethacrylat, Cyclohexylmethacrylat, Trimethylcyclohexylmethacrylat, 2-Ethylhexylacrylat, 2-Ethylhexylmethacrylat, Laurylacrylat, Laurylmethacrylat, Stearylacrylat, Stearylmethacrylat, Isobornylacrylat, Isobornylmethacrylat; Hydroxyalkylester der Acrylsäure oder Methacrylsäure, wie beta-Hydroxyethylacrylat, beta-Hydroxyethylmethacrylat, beta-Hydroxypropylacrylat, beta-Hydroxypropylmethacrylat, Butandiol-1,4-monoacrylat, Butandiol-1,4-monomethacrylat, Hexandiol-1,6-monoacrylat, Hexandiol-1,6-monomethacrylat.

Es können aber auch, zumindest teilweise, Polyalkylenoxid-mono-(meth)acrylate mit 2 bis 10 Alkylenoxid-Einheiten pro Molekül eingesetzt werden.

Ferner können Umsetzungsprodukte aus Hydroxyalkyl-(meth)acrylaten mit epsilon-Caprolacton verwendet werden.

Hydroxyfunktionelle Monomere, wie z.B. Hydroxyalkylester der Acrylsäure oder Methacrylsäure werden in solchen Mengen einpolymerisiert, daß sich für die Komponente B) bevorzugt eine OH-Zahl von 30 bis 200 mg KOH/g ergibt.

Zur Ausstattung des (Meth)acryl-Copolymerisats mit Carboxylgruppen können ungesättigte Säuren einpolymerisiert werden, wie beispielsweise (Meth)acrylsäure, Maleinsäure, Fumarsäure und deren Halbester. Sie werden in solchen Mengen einpolymerisiert, daß für die Komponente B) bevorzugt eine Säurezahl von 1 bis 50 mg KOH/g resultiert.

Zur Herstellung der Copolymeren können auch Comonomere mitverwendet werden, die sich von den (Meth)acrylmonomeren unterscheiden. Beispielsweise geeignet sind Vinylmonomere, wie Vinylaromaten, z.B. Styrol, Vinyltoluol, p-Methylstyrol und p-tertiär-Butylstyrol; Vinylether, wie Isobutylvinylether; Vinylester, wie Vinylacetat, Vinylpropionat, Vinylbenzoat, p-tert.-Butylvinylbenzoat und Vinylneodecanoat. Die Comonomeren können in Mengen bis zu 50 Gew.-%, beispielsweise 10 bis 50 Gew.-%, bevorzugt 10 bis 30 Gew.-%, jeweils bezogen auf das Gewicht der gesamten Monomeren, eingesetzt werden.

Es können auch anteilig mehrfach ungesättigte Monomere eingesetzt werden, z.B. Divinylbenzol, Ethylenglykoldi(meth)acrylat, Butandioldi(meth)acrylat. Derartige Monomere werden in geringen Mengen zugegeben, d.h. in solchen Mengen, daß die erhaltenen Produkte nicht gelieren.

Die erfindungsgemäßen Überzugsmittel enthalten als Komponente C) lackübliche Vernetzungsmittel, beispielsweise Aminoplastharze und/oder lackübliche blockierte und/oder nicht-blockierte Di- und Polyisocyanate. Bevorzugt enthalten die erfindungsgemäßen Überzugsmittel Di- und/oder Polyisocyanate als Vernetzer.

Es können übliche Aminoplastharze verwendet werden. Beispiele für Aminoplastharze sind alkylierte Kondensate, die durch Umsetzung von Aminotriazinen und Amidotriazinen mit Aldehyden hergestellt werden. Nach bekannten technischen Verfahren werden Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zum Formaldehyd und durch die Art des verwendeten Veretherungsalkohols. Bevorzugt eingesetzt werden Melaminharze, die mit n- oder iso-Butanol verethert sind und deren Veretherungsgrad ≤ 1,0 ist.

Die Aminoplastharze können auch zusammen mit Polyisocyanaten vorliegen. Der Anteil an Aminoplastharzen im Gemisch beträgt dabei vorzugsweise unter 50 Gew.-%, bezogen auf das Gewicht der Komponente C).

Als Polyisocyanate, die im Gemisch mit den Aminoplastharzen, aber bevorzugt auch allein als Vernetzerkomponente C) eingesetzt werden können, sind insbesondere aliphatische, cycloaliphatische und araliphatische geeignet. Als Diisocyanate werden bevorzugt Hexamethylen-1,6-diisocyanat, 3,5,5-Trimethylhexamethylen-1,6-diisocyanat, Isophorondiisocyanat, 1,3-Bis(isocyanatomethyl)cyclohexan, Bis-isocyanatocyclohexylmethan, Tetramethylxylylendiisocyanat (TMXDI) verwendet.

Als Polyisocyanate sind weiterhin beispielsweise geeignet Biuret-Gruppen enthaltende Polyisocyanate, z.B. Umsetzungsprodukte aus 3 Molen Hexamethylendiisocyanat mit 1 Mol Wasser mit einem NCO-Gehalt von ca. 22 %, oder Isocyanuratgruppen enthaltende Polyisocyanate, die z.B. durch Trimerisierung von 3 Molen Hexamethylendiisocyanat hergestellt werden mit einem NCO-Gehalt von etwa 21,5 %, oder Urethangruppen enthaltende Polyisocyanate, welche z.B. Reaktionsprodukte darstellen aus 3 Molen aliphatischen oder cycloaliphatischen Diisocyanaten mit 1 Mol Triol, z.B. Trimethylolpropan. Bevorzugt eingesetztes aliphatisches Diisocyanat ist das Isophorondiisocyanat.

Die Polyisocyanatvernetzer können partiell oder, falls ein über längere Zeit lagerfähiges, d.h. einkomponentiges Überzugsmittel gewünscht ist, vollständig mit aktiven Wasserstoff enthaltenden, monofunktionellen Verbindungen blockiert sein. Die Wahl des unter Rückbildung der freien Isocyanatgruppen thermisch wieder abspaltbaren Blockierungsmittels richtet sich nach den herrschenden Einbrennbedingungen bei der Aushärtung des erfindungsgemäßen Überzugsmittels. Bevorzugt werden die Polyisocyanatvernetzer unverkappt eingesetzt.

Als Blockierungsmittel können für Blockierungszwecke übliche, beispielsweise CH-acide, NH- oder OH-funktionelle Verbindungen verwendet werden, die unter Härtungsbedingungen die Vernetzung mit hydroxylfunktionellen Bindemitteln ermöglichen. Beispiele für verwendbare Blockierungsmittel sind Oxime und CH-acide Verbindungen wie Malon- oder Acetessigester. Dabei kann es günstig sein, verschiedene Verkappungsmittel gleichzeitig zur Anwendung zu bringen, was innerhalb eines Polyisocyanatmoleküls oder im Gemisch erfolgen kann.

Die erfindungsgemäßen Überzugsmittel können neben den bereits genannten Lösemitteln zusätzlich lackübliche Hilfsstoffe enthalten, z.B.: Verlaufsmittel, beispielsweise auf der Basis von (Meth)acryl-Homopolymerisaten, Silikonöle, Weichmacher wie Phosphorsäure-, Phthalsäure-, oder Zitronensäureester, Mattierungsmittel, wie pyrogenes Siliziumoxid. Rheologie-Beeinflusser, wie Mikrogele, N A D (= non-aqueousdispersions), disubstituierte Harnstoffe ("sagging control agents"), hydriertes Ricinusöl. Härtungsbeschleuniger, z.B. Phosphorsäure, Phosphorsäureester, Dicarbonsäure-Halbester, Zitronensäure; organische Metallsalze, wie Dibutylzinndilaurat, Zink-Naphthenat, ferner tertiäre Aminogruppen enthaltende Verbindungen wie Triethylamin.

Die erfindungsgemäßen Überzugsmittel können in wäßriger und nicht-wäßriger Form formuliert werden. Zur Formulierung wäßriger Überzugsmittel ist es zweckmäßig Komponenten A) und B) einzusetzen, die einen Säurezahlbereich über etwa 30 aufweisen. Diese Säurefunktionen enthaltenden Komponenten können dann partiell oder gänzlich mit Aminen neutralisiert und anschließend durch Verdünnen mit Wasser in die wäßrige Phase überführt werden.

Die erfindungsgemäßen Überzugsmittel sind besonders geeignet zur Erzeugung einer transparenten Deckschicht (Klarlackschicht) bei der Herstellung ofentrocknender Mehrschichtüberzüge. Die Deckschicht kann beispielsweise nach dem Naß-in-Naß-Verfahren aufgetragen werden, worauf beide Schichten gemeinsam gehärtet werden. Die Erfindung betrifft daher auch das Verfahren zur Herstellung von Mehrschicht-Überzügen bzw. die Verwendung der Überzugsmittel zu deren Herstellung. Die erfindungsgemäßen lösemittelhaltigen Überzugsmittel können dabei als transparente Decklacke auf Schichten aus wäßrigen oder lösemittelhaltigen Basislakken für härtbare Mehrschichtüberzüge aufgetragen werden.

Es können auch pigmentierte Überzugsmittel bereitgestellt werden. Hierzu können übliche organische und/oder anorganische Farbpigmente und/oder Füllstoffe, wie Titandioxid, mikronisiertes Titandioxid, Eisenoxidpigmente, Ruß, Siliciumdioxid, Bariumsulfat, mikronisierter Glimmer, Talkum, Azopigmente, Phthalocyaninpigmente, Chinacridon- oder Pyrrolopyrrolpigmente eingesetzt werden.

Die erfindungsgemäßen Überzugsmittel werden nach bekannten Verfahren, wie z.B. Spritzen, Tauchen, Rollen oder Rakeln, appliziert. Dabei wird auf das gegebenenfalls schon mit weiteren Lackschichten versehene Substrat der Decklacküberzug aufgetragen. Die erfindungsgemäßen Überzugsmittel können auch unter Verwendung von überkritischem Kohlendioxid als Lösemittel im Spritzverfahren appliziert werden. Dabei kann der Gehalt an organischen Lösemitteln stark verringert werden. Nach einer Abdunstphase wird das applizierte Überzugsmittel bevorzugt durch Erwärmen vernetzt. Die Einbrenntemperaturen liegen bevorzugt zwischen 80 und 160°C, besonders bevorzugt zwischen 120 bis 150°C. Die Härtungszeiten liegen beispielsweise in der Größenordnung von 20 bis 40 Minuten. Die Vernetzung kann aber auch bei niedrigeren Temperaturen durchgeführt werden, z.B. bei 20 bis 80°C. Die Schichtdicke des eingebrannten Films beträgt ca. 15 - 50 $\mu$m. Dabei entsteht ein vernetzter, harter, glänzender Lacküberzug. Eine bevorzugte Ausführungsform ist die Applikation des erfindungsgemäßen Überzugsmittels als Klarlacküberzug auf einen Basislack. Dabei kann naß-in-naß gearbeitet werden, oder der Basislack wird vorher durch Erwärmen getrocknet. Es entsteht eine besonders gute Haftung der beiden Schichten.

Mit erfindungsgemäß als Klarlacke formulierten Überzugsmitteln können beispielsweise Basislacke überlackiert werden, die übliche Decklackpigmente enthalten können, bevorzugt enthalten die Basislacke Effektpigmente, wie z.B. Metallic-Pigmente. Als Bindemittelbasis des Basislacks werden bevorzugt Polyester-, Polyurethan- oder Acrylatharze eingesetzt. Diese Bindemittel können gegebenenfalls über Vernetzer, z.B. Melamin- oder Isocyanatderivate, vernetzt werden.

Die erfindungsgemäßen Überzugsmittel eignen sich besonders für Decklacke oder Klarlacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, es kann jedoch auch für andere Zwecke verwendet werden, wie z.B. in der Autoreparaturlackierung, für Haushaltsgeräte oder in der Möbelindustrie.

Die erfindungsgemäßen Überzugsmittel sind besonders geeignet zur Herstellung einer transparenten Deckschicht eines ofentrocknenden Mehrschichtüberzugs. Sie eignen sich insbesondere für die Serienlackierung von Kraftfahrzeugkarosserien und deren Teilen.

Die unter Verwendung der erfindungsgemäßen Überzugsmittel hergestellten Decklackschichten, z.B. Klarlackschichten zeichnen sich durch eine überlegene Säurebeständigkeit, insbesondere Schwefelsäurebeständigkeit und eine hervorragende Kratzfestigkeit aus.

## Herstellung von Polyestern

### Beispiel 1

In eine für eine Polyesterharz-Synthese geeignete Reaktionsapparatur werden 85,5 g (0,929 Mol) Glycerin, 334,4 g (2,090 Mol) 2-Ethyl-2-Butylpropandiol-1,3 und 25 g Xylol eingewogen und bei stehendem Rührwerk auf ca. 80°C erwärmt. Dann werden unter Rühren 330,4 g (2,146 Mol) Hexahydrophthalsäureanhydrid, 250,2 g (0,447 Mol) dimerisierte Fettsäure und 47,8 g (0,357 Mol) Dimethylolpropionsäure zugesetzt und innerhalb von 6 Stunden auf 220°C erhitzt. Bei Erreichen einer Säurezahl von ca. 20 mg KOH/g wird auf 100°C abgekühlt und mit 428 g Solvesso 100 verdünnt. Die Polyesterharz-Lösung hat einen Festkörper von 70,2 % und eine Viskosität von 1330 mPa.s/25°C.

### Beispiel 2

In eine für eine Polyesterharz-Synthese geeignete Reaktionsapparatur werden 124,1 g (0,929 Mol) Hexantriol-1,2,6, 333,3 g (2,083 Mol) 2-Ethyl-2-Butylpropandiol-1,3 und 25 g Xylol eingewogen und bei stehendem Rührwerk auf ca. 80°C erwärmt. Dann werden unter Rühren 320,6 g (1,864 Mol) 1,4-Cyclohexandicarbonsäure, 250,2 g (0,447 Mol) dimerisierte Fettsäure, 9 g (0,092 Mol) Maleinsäureanhydrid und 47,8 g (0,357 Mol) Dimethylolpropionsäure zugesetzt und innerhalb von 6 Stunden auf 220°C erhitzt. Bei Erreichen einer Säurezahl von ca. 20 mg KOH/g wird auf 100°C abgekühlt und mit 428 g Solvesso 100 verdünnt. Die Polyesterharz-Lösung hat einen Festkörper von 70,6 % und eine Viskosität von 1200 mPa.s/25°C.

### Beispiel 3

In eine für eine Polyesterharz-Synthese geeignete Reaktionsapparatur werden 79,2 g (0,861 Mol) Glycerin, 309,9 g (1,937 Mol) 2-Ethyl-2-Butylpropandiol-1,3 und 25 g Xylol eingewogen und bei stehendem Rührwerk auf ca. 80°C erwärmt. Dann werden unter Rühren 318,5 g (2,068 Mol) Hexahydrophthalsäureanhydrid, 250,2 g (0,447 Mol) dimerisierte Fettsäure und 95,6 g (0,713 Mol) Dimethylolpropionsäure zugesetzt und innerhalb von 6 Stunden auf 220 ° C erhitzt. Bei Erreichen einer Säurezahl von ca. 40 mg KOH/g wird auf 100 ° C abgekühlt und mit 428 g Solvesso 100 verdünnt. Die Polyesterharz-Lösung hat einen Festkörper von 70,9 % und eine Viskosität von 2200 mPa.s/25 ° C.

**Beispiel 4**

In eine für eine Polyesterharz-Synthese geeignete Reaktionsapparatur werden 75,2 g (0,817 Mol) Glycerin, 294,1 g (1,838 Mol) 2-Ethyl-2-Butylpropandiol-1,3 und 25 g Xylol eingewogen und bei stehendem Rührwerk auf ca. 80 ° C erwärmt. Dann werden unter Rühren 376,1 g (2,442 Mol) Hexahydrophthalsäureanhydrid, 250,9 g (0,448 Mol) Dimer-Diol und 47,8 g (0,357 Mol) Dimethylolpropionsäure zugesetzt und innerhalb von 6 Stunden auf 220 ° C erhitzt. Bei Erreichen einer Säurezahl von ca. 20 mg KOH/g wird auf 100 ° C abgekühlt und mit 428 g Solvesso 100 verdünnt. Die Polyesterharz-Lösung hat einen Festkörper von 70,9 % und eine Viskosität von 1200 mPa.s/25 ° C.

**Beispiel 5**

In eine für eine Polyesterharz-Synthese geeignete Reaktionsapparatur werden 111,6 g (1,213 Mol) Glycerin und 200,0 g (1,754 Mol) epsilon-Caprolacton eingewogen und unter Rühren auf 160 ° C erhitzt. Das Reaktionsgut wird 2 Stunden bei 160 ° C gehalten. Dann werden 291,1 g (1,819 Mol) 2-Ethyl-2-Butylpropandiol-1,3 395,7 g (2,570 Mol) Hexahydrophthalsäureanhydrid, 47,8 g (0,357 Mol) Dimethylolpropionsäure zugesetzt und 25 g Xylol zugesetzt und innerhalb von 6 Stunden auf 220 ° C erhitzt. Bei Erreichen einer Säurezahl von ca. 20 mg KOH/g wird auf 100 ° C abgekühlt und mit 428 g Solvesso 100 verdünnt. Die Polyesterharz-Lösung hat einen Festkörper von 69,7 % und eine Viskosität von 555 mPa.s/25 ° C.

**Herstellung der (Meth)acryl-Copolymerisate**

**Beispiel 6**

In einen 2-Liter-Dreihals-Schliffkolben, der mit einem Rührwerk, Kontaktthermometer, Kugelkühler und Tropftrichter ausgerüstet ist, werden 60 g Vinylneodecanoat, 148 g Solvesso 100 (Handelsprodukt der Shell AG), 59 g Methoxypropylacetat und 24 g n-Butanol vorgelegt und unter Rühren bei eingeschalteter Rückflußkühlung auf 144 ° C geheizt. Innerhalb von 5,5 Stunden wird eine Mischung aus 13,1 g Acrylsäure, 40 g Butylmethacrylat, 40 g Isobutylmethacrylat, 151,5 g tert.-Butylacrylat, 177,7 g 2-Hydroxypropylmethacrylat, 10 g Di-tert.-Butylperoxid und 7,7 g tert.-Butylperoctoat kontinuierlich zudosiert. Anschließend wird der Ansatz 6 Stunden bei 141 ° C nachpolymerisiert, auf 80 ° C abgekühlt und mit 170 g Solvesso 100, 43 g Xylol und 56 g Butylacetat verdünnt. Die Polymerisat-Lösung hat einen Festkörper von 50,5 % und eine Viskosität von 146 mPa.s/25 ° C.

**Beispiel 7**

In einen 2-Liter-Dreihals-Schliffkolben, der mit einem Rührwerk, Kontaktthermometer, Kugelkühler und Tropftrichter ausgerüstet ist, werden 250 g Solvesso 100 (Handelsprodukt der Shell AG), 30 g n-Butanol vorgelegt und unter Rühren bei eingeschalteter Rückflußkühlung auf 142 ° C geheizt. Innerhalb von 5 Stunden wird eine Mischung aus 23 g Acrylsäure, 172 g Styrol, 216 g Ethylhexylacrylat, 200 g 2-Hydroxypropylmethacrylat, 4 g Di-tert.-Butylperoxid und 25 g Tert.-Butylperoctoat und 10 g Dicumylperoxid kontinuierlich zudosiert. Anschließend wird der Ansatz 4 Stunden bei 143 ° C nachpolymerisiert, auf 80 ° C abgekühlt und mit 50 g Solvesso 100 und 20 g n-Butanol verdünnt. Die Polymerisat-Lösung hat einen Festkörper von 65,1 % und eine Viskosität von 2460 mPa.s/25 ° C.

**Herstellung der Klarlacke**

**Beispiel 8**

392 Teile der Polyesterharzlösung aus Beispiel 1 und 292 Teile der (Meth)acryl-Copolymerisatlösung aus Beispiel 6 werden homogen gemischt und danach unter dem laufenden Rührer 21 Teile eines handelsüblichen Phthalats, 24 Teile eines Gemisches handelsüblicher Lichtschutzmittel (HALS- und Benztriazol-Derivat im Verhältnis 1 : 1), 14 Teile einer 1 %igen xylolischen Lösung handelsüblicher Silikonöle (Verlaufs- und Benetzungsmittel) und 257 Teile eines Lösemittelgemisches aus Butylglykolacetat, Butyldiglykolacetat, Ethoxypropylacetat und hochsiedenden aromatischen Kohlenwasserstoffen im Verhältnis 12 : 12 : 8 : 68 zugegeben.

In 100 Teile dieser Lösung werden 35 Teile einer 82 %igen Lösung eines lacküblichen aliphatischen Isocyanurat-Polyisocyanats in Xylol : Butylacetat = 1 : 1 homogen eingerührt. Dieser Klarlack wurde wie nachstehend erläutert zur Herstellung einer Mehrschichtlackierung verwendet.

Mit in der Automobilserienlackierung verwendetem handelsüblichem kathodisch abscheidbarem Elektrotauchlack (KTL) (18 $\mu$m) und handelsüblichem Füller (35 $\mu$m) vorbeschichtete Karosseriebleche wurden mit handelsüblichem wasserverdünnbarem Metallic-Basislack in einer Trockenfilmschichtdicke von 15 $\mu$m lackiert und 6 min. bei 80°C vorgetrocknet. Direkt anschließend wurde der vorstehend beschriebene Klarlack in einer Trockenfilmschichtdicke von 35 $\mu$m durch Spritzauftrag naß-in-naß appliziert und nach 5 min. Ablüften bei Raumtemperatur 30 min. bei 130°C (Objekttemperatur) eingebrannt.

**Beispiel 9**

Es wird analog zu Beispiel 8 gearbeitet, mit dem Unterschied, daß 392 Teile der Polyesterharzlösung aus Beispiel 2 und 292 Teile der (Meth)acryl-Copolymerisatlösung aus Beispiel 6 verwendet wurden.

**Beispiel 10**

Es wird analog zu Beispiel 8 gearbeitet, mit dem Unterschied, daß 392 Teile der Polyesterharzlösung aus Beispiel 3 und 292 Teile der (Meth)acryl-Copolymerisatlösung aus Beispiel 6 verwendet wurden.

**Beispiel 11**

Es wird analog zu Beispiel 8 gearbeitet, mit dem Unterschied, daß 392 Teile der Polyesterharzlösung aus Beispiel 4 und 292 Teile der (Meth)acryl-Copolymerisatlösung aus Beispiel 6 verwendet wurden.

**Beispiel 12**

Es wird analog zu Beispiel 8 gearbeitet, mit dem Unterschied, daß 196 Teile der Polyesterharzlösung aus Beispiel 1 und 488 Teile der (Meth)acryl-Copolymerisatlösung aus Beispiel 7 verwendet wurden. In 100 Teile dieser Lösung werden 35 Teile einer 69,3 %igen Lösung eines Gemisches von lacküblichem Hexamethylendiisocyanat- und Isophorondiisocyanat-Trimerem im Verhältnis 1 : 1, gelöst in Xylol, Solvesso 100, Butylacetat und Methoxypropylacetat im Verhältnis 25 : 20 : 30 : 25 homogen eingerührt.

**Beispiel 13**

Es wird analog zu Beispiel 8 gearbeitet, mit dem Unterschied, daß 128 Teile der Polyesterharzlösung aus Beispiel 5 und 556 Teile der (Meth)acryl-Copolymerisatlösung aus Beispiel 7 verwendet wurden.

Zur Prüfung der Klarlacke auf Kratzfestigkeit wurde die Hub-Schub-Methode mit dem Erichsen-Peters-Klotz, Typ Nr. 265 angewendet. Die Abmessungen sind: 75 x 75 x 50 mm, Grundfläche = 3750 mm². Das Gewicht beträgt 2 kg. Unter den Schleifklotz wird mit Klettband ein 2,5 mm dicker Wollfilz, Abmaße 30 x 50 mm, geklebt. Dann wird 1 g einer wasserlöslichen Schleifpaste gleichmäßig auf der Auflagefläche verteilt. Es werden 10 Doppelhübe in 9 s durchgeführt. Der Hub-Schub erfolgt parallel zur 75 mm-Kante des Blockes, der Schleifweg beträgt 90 mm in einer Richtung. Anschließend wird mit kaltem Wasser abgespült, getrocknet und eine Glanzmessung bei einem Winkel von 20° durchgeführt.

Als Maß für die Kratzfestigkeit eines Lackes wird der nach der Schleifbeanspruchung noch verbliebene Restglanz in Prozent angegeben.

$$\text{Restglanz (\%)} = \frac{\text{Glanz nach der Beanspruchung x 100}}{\text{Glanz vor der Beanspruchung}}$$

EP 0 688 840 A2

| | Erfindungsgemäße Klarlacke: | | | | | | Vergleichs-Klarlack: DE-A-39 18 968 |
|---|---|---|---|---|---|---|---|
| Beispiel: | 8 | 9 | 10 | 11 | 12 | 13 | Beispiel C-2* |
| Verarbeitungsfestkörper Gew.-%: | 52.7 | 53.0 | 52.2 | 53.1 | 51.9 | 51.1 | 47.6 |
| Glanz 20°: | 85 | 84 | 86 | 85 | 88 | 89 | 84 |
| Schwefelsäure-Test: (38 %ige $H_2SO_4$, 30 min. 60°C | | | | | | | |
| Quellung (min) Vermattung " | 18 26 | 19 25 | 30 >30 | 16 >30 | 24 >30 | 28 30 | 10 19 |
| Kratzfestigkeit (%): | 89 | 76 | 77 | 88 | 72 | 78 | 60 |

* Dieser Klarlack hat eine starke Kristallisationsneigung und eine sehr kurze Verarbeitungszeit.

**Patentansprüche**

1. Überzugsmittel auf der Basis hydroxyfunktioneller Polyesterharze, hydroxylfunktioneller (Meth)acryl-Copolymerisate, Vernetzungsmittel, lacküblicher Additive und Lösemittel, dadurch gekennzeichnet, daß sie Bindemittel enthalten auf der Basis von

   A) 10 bis 80 Gew.-% eines oder mehrerer hydroxyfunktioneller Polyester, die erhältlich sind durch Reaktion von:

   a1) 0 bis 30 Mol-% eines oder mehrerer Glycidylester von alpha,alpha-dialkylsubstituierten aliphatischen Monocarbonsäuren,

   a2) 10 bis 40 Mol-% eines oder mehrerer 2,2-Dialkylalkandiole,

   a3) 10 bis 30 Mol-% eines oder mehrerer Polyole mit mindestens einer sekundären OH-Gruppe im Molekül,

   a4) 20 bis 50 Mol-% einer oder mehrerer aliphatischer und/oder cycloaliphatischer Dicarbonsäuren mit weniger als 16 C-Atomen oder deren Anhydride,

   a5) 5 bis 30 Mol-% einer oder mehrerer Dimer-Fettsäuren und/oder Dimer-Diole und/oder epsilon-Caprolacton,

   a6) 1 bis 15 Mol-% einer oder mehrerer Hydroxycarbonsäuren mit mindestens einer Hydroxylgruppe und mindestens einer Carboxylgruppe im Molekül,

   a7) 0 bis 3 Mol-% einer oder mehrerer alpha,beta-ungesättigter Dicarbonsäuren oder deren Anhydriden,

   wobei die Summe der Mol-% a1) bis a7) sich jeweils zu 100 Mol-% ergänzt,

   B) 10 bis 80 Gew.-% eines oder mehrerer hydroxylgruppenhaltiger (Meth)acryl-Copolymerisate,

   C) 10 bis 60 Gew.-% eines oder mehrerer Vernetzungsmittel,

   wobei die Summe der Gew.-% der Komponenten A) bis C) sich jeweils zu 100 Gew.-% ergänzt.

2. Überzugsmittel nach Anspruch 1, dadurch gekennzeichnet, daß als Komponente A) ein oder mehrere Polyester eingesetzt werden mit einer Hydroxylzahl von 40 - 200 mg KOH/g, einer Säurezahl von 5 bis 100 mg KOH/g, einem Gewichtsmittel des Molekulargewichts (Mw) von 500 bis 6000 g/Mol.

3. Überzugsmittel nach Anspruch 1 oder 2, dadurch gekennzeichnet, daß als Komponente B) ein oder mehrere (Meth)acryl-Copolymerisate eingesetzt werden mit einer Hydroxylzahl von 30 - 200 mg KOH/g, einer Säurezahl von 1 - 50 mg KOH/g und einem Gewichtsmittel des Molekulargewichts (Mw) von 2000 bis 20000 g/Mol.

4. Überzugsmittel nach Anspruch 1 bis 3, dadurch gekennzeichnet, daß als Komponente C) ein oder mehrere Aminoplastharze eingesetzt werden.

5. Überzugsmittel nach Anspruch 1 bis 4, dadurch gekennzeichnet, daß als Komponente C) ein oder mehrere freie oder geblockte Polyisocyanate eingesetzt werden.

9

**6.** Überzugsmittel nach Anspruch 1 bis 3, dadurch gekennzeichnet, daß als Komponente C) ein Gemisch aus einem oder mehreren Aminoplastharzen und ein oder mehreren geblockten Polyisocyanaten eingesetzt wird.

**7.** Überzugsmittel nach einem der Ansprüche 1 bis 6, dadurch gekennzeichnet, daß es pigmentfrei oder mit transparenten Pigmenten als Klarlack formuliert ist.

**8.** Verfahren zur Herstellung von Mehrschichtüberzügen durch Auftrag einer Basislackschicht auf ein gegebenenfalls bereits mit einer oder mehreren Überzugsschichten versehenes Substrat, und Überlakkieren der erhaltenen Basislackschicht nach dem Trocknen oder naß-in-naß mit einer Decklackschicht aus einem transparenten Überzugsmittel nach einem der Ansprüche 1 bis 7.

**9.** Verfahren nach Anspruch 8, dadurch gekennzeichnet, daß es zur Herstellung von Mehrschichtlackierungen von Kraftfahrzeugkarosserien oder deren Teilen durchgeführt wird.

**10.** Verwendung der Überzugsmittel nach einem der Ansprüche 1 bis 7 zur Herstellung transparenter Deckschichten von Mehrschichtüberzügen, insbesondere auf dem Kraftfahrzeugsektor.